# EUROPEAN PATENT SPECIFICATION

(11) **EP 4 438 692 B1**
(45) Date of publication and mention of the grant of the patent: **09.09.2026**
(21) Application number: 22898659.2
(22) Date of filing: 25.11.2022
(51) Int. Cl.: C09K 5/04, C09K 3/30, C08J 9/14

(54) **COMPOSITION**
ZUSAMMENSETZUNG
COMPOSITION

(30) Priority: 26.11.2021 JP 2021191866
(43) Date of publication of application: 02.10.2024
(73) Proprietor: Daikin Industries, Ltd., Osaka-shi, Osaka 530-0001 (JP)
(72) Inventor: KARUBE, Daisuke, Osaka-Shi, Osaka 530-0001 (JP); ITO, Ryuo, Osaka-Shi, Osaka 530-0001 (JP); GOBOU, Kenji, Osaka-Shi, Osaka 530-0001 (JP); NAKAUE, Tsubasa, Osaka-Shi, Osaka 530-0001 (JP); TSUCHIYA, Tatsumi, Osaka-Shi, Osaka 530-0001 (JP)
(74) Representative: Hoffmann Eitle
(86) International application number: PCT/JP2022/043564
(87) International publication number: WO 2023/095877

(56) References cited:
- WO-A1-2015/137166
- WO-A1-2016/009884
- WO-A1-2016/080264
- WO-A1-2017/065134
- CA-A- 832 469
- JP-A- 2015 514 827
- JP-A- 2019 031 624

## Description

### Technical Field

The present disclosure relates to a composition.

### Background Art

Fluoroethylene is used for various applications, including heat transfer media, and its demand is expected to continue to increase in the future.

On the other hand, if contaminated with oxygen, fluoroethylene may be gradually decomposed to produce hydrogen fluoride. The produced hydrogen fluoride may cause deterioration of refrigeration oil, which may lead to corrosion or damage to equipment or containers. In order to prevent this, measures have been taken to suppress the contamination of oxygen and/or to add acid scavengers to the refrigeration oil added to fluoroethylene.

JP-A-2021-14594 discloses a fluoroethylene-containing composition containing a polymerization inhibitor. WO 2020/017522 discloses a mode of incorporating an antioxidant into a refrigeration oil.

CA-A-832 469 discloses a process for preparing halogenated epoxides by heating a haloolefin of the formula CF2=CFX (X being H, F, Cl, -CF₃, -CF₂H, -C₂F₅, -CF₂CF₂H or -CF=CF₂) with oxygen in an inert solvent at superatmospheric pressure and 50-200°C.

WO 2016/080264 describes a trifluoroethylene working fluid composition comprising a refrigeration oil comprising (i) a base oil including an ester of a branched chain C₄₋₉-fatty acid and a polyhydric alcohol and (ii) 0.2-0.5 mass%, based on the total amount of the refrigeration oil, of a phenolic antioxidant.

WO 2017/065134 relates to a refrigerator oil containing a polyol ester wherein the value obtained by (molecular weight) × (total number of carbon atoms)/(number of carbonyl carbon atoms) is ≤ 10,000 or less; and a refrigerant composition containing the same.

WO 2015/137166 concerns a trifluoroethylene refrigerant composition comprising a refrigerator oil containing as a base oil at least one type of oxygen-containing oil having a carbon/oxygen mole ratio of 2.5-5.8.

WO 2016/009884 provides a refrigerator oil composition for fluoroethylene refrigerant compositions, comprising an unsaturated compound of the formula C₂FₚR₄₋ₚ (wherein R is H, Cl, Br or I, and p is an integer 1-3), and a base oil (P) which contains at least one of a polyvinyl ether, a polyalkylene glycol, a poly(oxy)alkylene glycol or a copolymer of a monoether or polyvinyl ether of same, and a polyol ester, and has a dynamic viscosity of at 100°C of 2.00-50.00mm²/s and a hydroxyl value of ≤ 5.0mgKOH/g.

### Summary of Invention

### Technical Problem

In view of the above circumstances, an object of the present disclosure is to provide a composition that can suppress the production of hydrogen fluoride from fluoroethylene.

### Solution to Problem

As a result of extensive research to achieve the above object, the present inventors found that the production of hydrogen fluoride can be suppressed by allowing fluoroethylene to coexist with an epoxide of the fluoroethylene. Upon further research based on this finding, the present inventors have completed the present invention.

Specifically, the present invention provides a composition (also referred to as "the present composition" hereinafter) comprising fluoroethylene and, based on the mass of the fluoroethylene, 1-50,000 mass ppm of an epoxide of the fluoroethylene.

Also, the present invention provides the use of the present composition as a heat transfer medium, a foaming agent, or a propellant

Preferred embodiments of the invention are as defined in the appended dependent claims and/or in the following detailed description.

### Advantageous Effects of Invention

The present composition can suppress the production of hydrogen fluoride.

### Description of Embodiments

In the present specification, the terms "comprise," "contain," and "include" encompass the concepts of comprising, consisting essentially of, and consisting of. In the present specification, a numerical range indicated by "A to B" means A or more and B or less.

The present composition comprises fluoroethylene and, based on the mass of the fluoroethylene, 1-50,000 mass ppm of an epoxide of the fluoroethylene.

The fluoroethylene contained in the present composition is not limited. The fluoroethylene preferably has two or more fluorine atoms, more preferably two or three fluorine atoms, and particularly preferably two fluorine atoms.

The fluoroethylene is preferably at least one member selected from 1,2-difluoroethylene and trifluoroethylene, and more preferably 1,2-difluoroethylene, from the standpoint of more easily improving stability.

1,2-Difluoroethylene has two types of isomers (E-isomer and Z-isomer). Specifically, there are two types of isomers: trans-1,2-difluoroethylene (HFO-1132(E)) and cis-1,2-difluoroethylene (HFO-1132(Z)). In the present fluoroethylene composition, when the fluoroethylene is 1,2-difluoroethylene, the 1,2-difluoroethylene may be one of these isomers or a mixture of both isomers. That is, when the fluoroethylene is 1,2-difluoroethylene in the present composition, the 1,2-difluoroethylene can be trans-1,2-difluoroethylene (HFO-1132(E)) and/or cis-1,2-difluoroethylene (HFO-1132(Z)).

When the fluoroethylene is 1,2-difluoroethylene, the 1,2-difluoroethylene is preferably its E-isomer. Specifically, the 1,2-difluoroethylene preferably contains 50 mass% or more, more preferably 55 mass% or more, still more preferably 60 mass% or more, and particularly preferably 70 mass% or more of the E-isomer.

Herein, the expression "1,2-difluoroethylene" or "HFO-1132" includes all of the following: the E-isomer of 1,2-difluoroethylene, the Z-isomer of 1,2-difluoroethylene, and a mixture of the E-isomer and Z-isomer of 1,2-difluoroethylene. Herein, the E-isomer alone of 1,2-difluoroethylene is referred to as "1,2-difluoroethylene(E)" or "HFO-1132(E)," the Z-isomer alone of 1,2-difluoroethylene is referred to as "1,2-difluoroethylene(Z)" or "HFO-1132(Z)," and a mixture of the E-isomer and Z-isomer of 1,2-difluoroethylene is referred to as "1,2-difluoroethylene(E,Z)" or "HFO-1132(E,Z)," where necessary.

In the present composition, the method for producing the fluoroethylene is not limited. For example, the fluoroethylene can be produced by known production methods. 1,2-Difluoroethylene for use as the fluoroethylene contained in the present composition can be produced by a reaction of dehydrofluorination of 1,1,2-trifluoroethane, hydrogenation of 1,2-dichloro-1,2-difluoroethylene, hydrogenation and decomposition of 1,2-dichlorodifluoroethylene, or dehydrochlorination of 1-chloro-1,2-difluoroethane.

The content of the epoxide contained in the present composition is 1-50,000 mass ppm, based on the mass of the fluoroethylene, and is preferably 5 mass ppm or more, and more preferably 50 mass ppm or more, based on the mass of the fluoroethylene. This makes it easy to obtain an effect of suppressing the production of hydrogen fluoride, and makes it possible to effectively suppress the deterioration of the equipment and composition due to the production of hydrogen fluoride.

The content of the epoxide is preferably 5000 mass ppm or less, and more preferably 500 mass ppm or less, based on the mass of the fluoroethylene.

When the content of the epoxide is 50000 mass ppm or less based on the mass of the fluoroethylene, it is possible to suppress the deterioration of the composition due to side reactions caused by the epoxide and prevent changes in the physical properties of the fluoroethylene.

The contents of the fluoroethylene and its epoxide in the present composition can be specified by well-known analytical methods, such as gas chromatography.

The method for producing the epoxide of fluoroethylene contained in the , based on the mass of the fluoroethylene, 1-50,000 mass ppm composition is not limited, and a wide range of known methods can be used. For example, it can be obtained by bringing the fluoroethylene into contact with an oxidant in the liquid or gas phase.

As the oxidant, a wide variety of known oxidants used in this technical field can be used without any limitation. Specific examples include chlorine compounds, such as chlorate, chlorite, and hypochlorite; bromine compounds, such as bromate, bromite, and hypobromite; and oxygen.

When the present composition contains oxygen, the oxygen content is preferably 1 mol ppm or more, more preferably 3 mol ppm or more, and even more preferably 5 mol ppm or more, based on the number of moles of the fluoroethylene. Setting the oxygen content to 1 mol ppm or more based on the number of moles of the fluoroethylene is advantageous in that an epoxide can be produced from the fluoroethylene.

Further, the oxygen content in the present composition is preferably 5000 mol ppm or less, more preferably 3000 mol ppm or less, and even more preferably 1000 mol ppm or less, based on the number of moles of the fluoroethylene. Setting the oxygen content to 5000 mol ppm or less based on the number of moles of the fluoroethylene is advantageous in that undesired side reactions other than the production of epoxides, such as decomposition and polymerization reactions, can be suppressed.

The oxygen content can be quantified by measuring the oxygen content in the gas phase by using a commercially available gas chromatograph or oximeter and converting the measured value into the oxygen content in the liquid phase.

When the present composition contains water, the water content is preferably 0.1 mass ppm or more, more preferably 1 mass ppm or more, and even more or preferably 2 mass ppm or more, based on the mass of the fluoroethylene.

Further, the water content in the present composition is preferably 100 mass ppm or less, more preferably 50 mass ppm or less, and even more preferably 20 mass ppm or less, based on the mass of the fluoroethylene. Because the water content is 100 mass ppm or less based on the mass of the fluoroethylene, the production of acids or solids due to side reactions can be suppressed, and the stability of the composition can be ensured.

The water content can be measured by a known method, such as titration using a commercially available Karl Fischer moisture titrator.

In the present composition, the epoxide captures hydrogen fluoride, which can suppress the production of hydrogen fluoride. Further, in the present composition, as the epoxide contained in the present composition is an epoxide of the fluoroethylene contained in the present composition, the fluoroethylene and epoxide have close boiling points due to their similar structures, and the composition has excellent handling properties.

The present composition may contain substances other than those listed above within the range that does not impair the effect or object thereof. For example, the composition may contain impurities that can become mixed in during the production of fluoroethylene. When the fluoroethylene is 1,2-difluoroethylene, examples of such impurities include at least one member selected from fluoroethylene, trifluoroethylene, 1,1,1-trifluoroethane, propylene, acetylene, difluoromethane, trifluoromethane, fluoromethane, 1,1,2-trifluoroethylene (HFO-1123), 1,1-difluoroethane (HFC-152a), fluoroethane (HFC-161), 1,1,2-trifluoroethane (HFC-143), 2-chloro-1,1,1-trifluoroethane (HCFC-133b), 1-chloro-1,1,2-trifluoroethane (HCFC-133), 1,1-dichloro-2,2,2-trifluoroethane (HCFC-123), 1-chloro-1,2-difluoroethane (HCFC-142a), 1,2-difluoroethane (HFC-152), chlorodifluoromethane (HCFC-22), 1,1,1,2-tetrafluoroethane (HFC-134a), 1,1,2,2-tetrafluoroethane (HFC-134), pentafluoroethane (HFC-125), 2,3,3,3-tetrafluoropropene (HFO-1234yf), 1,2,3,3,3-pentafluoropropene (HFO-1225ye), 1,3,3,3-tetrafluoropropene (HFO-1234ze), fluoroethylene (HFO-1141), 3,3,3-trifluoropropene (HFO-1243zf), 1,1-difluoroethylene (HFO-1132a), 1-chloro-2,2-difluoroethylene (HCFO-1122), 1-chloro-1,2-difluoroethylene (HCO-1122a), and ethylene.

When the present composition contains the impurities mentioned above, their content is not limited. For example, the impurities may be contained in an amount of 0.1 mass ppm or more based on the mass of the fluoroethylene. Further, the impurities are preferably contained in an amount of 10000 mass ppm or less.

The present composition may contain other components as components having refrigerant function other than fluoroethylene. Examples of such components include 2,3,3,3-tetrafluoropropene (HFO-1234yf), 1,3,3,3-tetrafluoropropene (HFO-1234ze), 1,1,2-trifluoroethylene (HFO-1123), 1,1-difluoroethylene (HFO-1132a), 1,1,1,2-tetrafluoroethane (HFC-134a), 1,1,1-trifluoroethane (HFC-143a), 1,1-difluoroethane (HFC-152a), difluoromethane (HFC-32), iodotrifluoromethane, carbon dioxide, propane, butane, and isobutane. When the present composition contains these components, the total content of the other components is preferably 3-97 mass%, and more preferably 30-90 mass%, based on the total amount of the components having refrigerant function, which is taken as 100 mass%.

When the present composition is used for a heat transfer medium, the composition may further contain a lubricating oil within the range that does not impair the effect of the present composition. The lubricating oil is not limited. For example, known lubricating oils used for refrigerants can be widely used.

In the present specification, the refrigerant includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .

The content ratio of the refrigerant in the present composition is preferably 50 mass% or more. The upper limit for the refrigerant in the composition is not limited, and can be, for example, 100 mass%.

The content ratio of the fluoroethylene in the refrigerant contained in the present composition is preferably 3-100 mass%, more preferably 5-70 mass%, and even more preferably 10-50 mass%, in 100 mass% of the refrigerant.

Examples of specific lubricating oils include at least one member selected from polyalkylene glycols, polyol esters, and polyvinyl ethers. Examples of polyalkylene glycol (PAG) include SUNICE P56, produced by Japan Sun Oil Company, Ltd. Examples of polyol ester (POE) include Ze-GLES RB series, produced by ENEOS Holdings, Inc. Examples of polyvinyl ether (PVE) include Daphne Hermetic Oil FVC-D Series, produced by Idemitsu Kosan Co., Ltd.

The lubricating oil is preferably contained in an amount of 1-50 mass%, and more preferably 10-40 mass%, when the total amount of the present composition is taken as 100 mass%. However, the amount is not limited to these ranges, and can vary depending on the specifications of the oil tank of a refrigerating machine.

The present composition may contain an antioxidant for the lubricating oil mentioned above within the range that does not impair the effect and object thereof. Specific examples of such antioxidants include 2,6-di-tert-butyl-p-cresol, 4-hydroxy-3-t-butylanisole, triethylamine, 4-t-butylpyrocatechol, α-methylstyrene, and potassium hydrogen phthalate. These may be used singly or in a mixture of two or more. The content of the antioxidant may be appropriately set depending on the amount of the lubricating oil used.

The present composition may further contain additives other than the components mentioned above. When the present composition contains other additives, the content of the other additives can be 5 mass% or less, preferably 1 mass% or less, more preferably, 0.1 mass% or less, and particularly preferably 0.05 mass% or less, based on the mass of the component having refrigerant function.

The method of preparing the present composition is not limited. For example, a fluoroethylene composition can be prepared by mixing fluoroethylene, its epoxide, and water in a predetermined ratio. In the mixing, the lubricating oil and/or other additives mentioned above can also be appropriately added. Further, by blowing air or oxygen into the composition, the amount of oxygen in the composition can be adjusted to be within a desired range.

In the production of fluoroethylene or its epoxide, the impurities mentioned above may coexist with the fluoroethylene or its epoxide. These impurities may be removed in advance by an appropriate method before the preparation of the composition, or may otherwise be used without removal to prepare the composition.

The present composition can be used for various applications, such as for heat transfer media, foaming agents, and propellants. The quality of such heat transfer media, foaming agents, and propellants is maintained over a long period of time because the production of hydrogen fluoride is suppressed to cause less deterioration.

### Examples

Embodiments of the present invention are described in more detail below based on Examples.

### Evaluation Method

### Fluoroethylene Stability Test

A stability test was performed as follows. Specifically, a composition was placed in a glass tube (8 mm ID × 12 mm OD × 300 mm L) with one side sealed by fusing, so that the amount of 1,2-difluoroethylene added was 8.9 mmol. 1,2-Difluoroethylene epoxide, oxygen, and water were added in predetermined amounts in advance. The tube was then hermetically sealed by fusing. The tube was allowed to stand in a constant-temperature bath in an atmosphere at 175°C and kept in this state for two weeks. Thereafter, the tube was removed from the constant-temperature bath and cooled. While the appearance was observed, the acid in the gas inside the tube was analyzed to thus evaluate the stability of fluoroethylene.

In the fluoroethylene stability test, the acid in the gas was analyzed by the following method. Gas remaining in the above tube after cooling was completely solidified using liquid nitrogen. The tube was then opened and gradually thawed to collect gas into a Tedlar bag. 5 g of pure water was injected into the Tedlar bag to extract the acid into the pure water while efficiently bringing the pure water into contact with the collected gas. The extract was detected by ion chromatography to measure the content (mass ppm) of fluoride ions (F⁻). The measured amount of fluoride ions was regarded as the amount of hydrogen fluoride produced.

### Example 1

125 mass ppm of 1,2-difluoroethylene epoxide relative to 1,2-difluoroethylene and 100 mol ppm of oxygen were added to perform the fluoroethylene stability test. When the tube was removed from the constant-temperature bath and the gas was analyzed, the production of hydrogen fluoride was not observed.

### Example 2

Evaluation was carried out in the same manner as in Example 1, except that 125 mass ppm of 1,2-difluoroethylene epoxide relative to 1,2-difluoroethylene and 500 mol ppm of oxygen were added in advance. When the tube was removed from the constant-temperature bath and the gas was analyzed, it was found that 35 mass ppm of hydrogen fluoride was produced relative to 1,2-difluoroethylene.

### Example 3

Evaluation was carried out in the same manner as in Example 1, except that 70 mass ppm of 1,2-difluoroethylene epoxide relative to 1,2-difluoroethylene and 500 mol ppm of oxygen were added in advance. When the tube was removed from the constant-temperature bath and the gas was analyzed, it was found that 49 mass ppm of hydrogen fluoride was produced relative to 1,2-difluoroethylene.

### Comparative Example 1

Evaluation was carried out in the same manner as in Example 1, except that 1,2-difluoroethylene epoxide was not added, and only 500 mol ppm of oxygen was added in advance to 1,2-difluoroethylene. When the tube was removed from the constant-temperature bath and the gas was analyzed, it was found that 67 mass ppm of hydrogen fluoride was produced relative to 1,2-difluoroethylene.

### Example 4

Evaluation was carried out in the same manner as in Example 1, except that 125 mass ppm of 1,2-difluoroethylene epoxide relative to 1,2-difluoroethylene, 500 mol ppm of oxygen, and 200 mass ppm of water were added in advance. When the tube was removed from the constant-temperature bath and the gas was analyzed, it was found that 56 mass ppm of hydrogen fluoride was produced relative to 1,2-difluoroethylene.

### Example 5

Evaluation was carried out in the same manner as in Example 1, except that 1,1,2-trifluoroethylene was used in place of 1,2-difluoroethylene, and 50 mass ppm of 1,1,2-trifluoroethylene epoxide relative to 1,1,2-trifluoroethylene and 100 mol ppm of oxygen were added in advance. When the tube was removed from the constant-temperature bath and the gas was analyzed, it was found that 5 mass ppm of hydrogen fluoride was produced relative to 1,1,2-trifluoroethylene.

### Comparative Example 2

Evaluation was carried out in the same manner as in Example 1, except that a mixed refrigerant of 23 mass% of 1,2-difluoroethylene and 77 mass% of 2,3,3,3-tetrafluoropropene was used in place of 1,2-difluoroethylene, and 500 mol ppm of oxygen were added in advance. When the tube was removed from the constant-temperature bath and the gas was analyzed, it was found that 200 mass ppm of hydrogen fluoride was produced relative to the mixed refrigerant of 1,2-difluoroethylene and 2,3,3,3-tetrafluoropropene.

### Example 6

Evaluation was carried out in the same manner as in Example 1, except that 125 mass ppm of 1,2-difluoroethylene epoxide relative to 1,2-difluoroethylene, 100 mass ppm of potassium hydrogen phthalate, and 500 mol ppm of oxygen were added in advance. When the tube was removed from the constant-temperature bath and the gas was analyzed, it was found that 32 mass ppm of hydrogen fluoride was produced relative to 1,2-difluoroethylene.

### Example 7

Evaluation was carried out in the same manner as in Example 1, except that a mixed refrigerant of 23 mass% of 1,2-difluoroethylene and 77 mass% of 2,3,3,3-tetrafluoropropene was used in place of 1,2-difluoroethylene, and 30 mass ppm of 1,2-difluoroethylene epoxide relative to the mixed refrigerant and 500 mol ppm of oxygen were added in advance. When the tube was removed from the constant-temperature bath and the gas was analyzed, it was found that 160 mass ppm of hydrogen fluoride was produced relative to the mixed refrigerant of 1,2-difluoroethylene and 2,3,3,3-tetrafluoropropene.

### Example 8

Evaluation was carried out in the same manner as in Example 1, except that a mixed refrigerant of 23 mass% of 1,2-difluoroethylene and 77 mass% of 2,3,3,3-tetrafluoropropene was used in place of 1,2-difluoroethylene, and 30 mass ppm of 1,2-difluoroethylene epoxide relative to the mixed refrigerant, 100 mass ppm of potassium hydrogen phthalate relative to the mixed refrigerant, and 500 mol ppm of oxygen were added in advance. When the tube was removed from the constant-temperature bath and the gas was analyzed, it was found that 5 mass ppm of hydrogen fluoride was produced relative to the mixed refrigerant of 1,2-difluoroethylene and 2,3,3,3-tetrafluoropropene.

**Table 1**

| | Refrigerant ratio | | | Amount of oxygen added | Amount of water added | Epoxide | | Stabilizer | Amount of HF produced |
|---|---|---|---|---|---|---|---|---|---|
| | HFO-1132E | HFO-1123 | R-1234yf | | | 1,2-Difluoroethylene epoxide | 1,1,2-Trifluoroethylene epoxide | Potassium hydrogen phthalate | |
| | [mass%] | [mass%] | [mass%] | [mol ppm] | [mass ppm] | [mass ppm] | [mass ppm] | [mass ppm] | [mass ppm] |
| Comp. Ex. 1 | 100 | 0 | 0 | 500 | 0 | 0 | 0 | 0 | 67 |
| Comp. Ex. 2 | 23 | 0 | 77 | 500 | 0 | 0 | 0 | 0 | 200 |
| Ex. 1 | 100 | 0 | 0 | 100 | 0 | 125 | 0 | 0 | 0 |
| Ex. 2 | 100 | 0 | 0 | 500 | 0 | 125 | 0 | 0 | 35 |
| Ex. 3 | 100 | 0 | 0 | 500 | 0 | 70 | 0 | 0 | 49 |
| Ex. 4 | 100 | 0 | 0 | 500 | 200 | 125 | 0 | 0 | 56 |
| Ex. 5 | 0 | 100 | 0 | 100 | 0 | 0 | 50 | 0 | 5 |
| Ex. 6 | 100 | 0 | 0 | 500 | 0 | 125 | 0 | 100 | 32 |
| Ex. 7 | 23 | 0 | 77 | 500 | 0 | 30 | 0 | 0 | 160 |
| Ex. 8 | 23 | 0 | 77 | 500 | 0 | 30 | 0 | 100 | 5 |

## Claims

1. A composition comprising fluoroethylene and, based on the mass of the fluoroethylene, 1-50,000 mass ppm of an epoxide of the fluoroethylene.

2. The composition of claim 1, wherein the fluoroethylene has ≥ 2 fluorine atoms.

3. The composition of claim 1 or 2, which contains 1-5,000 mol ppm of oxygen, based on the mass of the fluoroethylene.

4. The composition of any of claims 1-3, which contains 0.1-100 mass ppm of water, based on the mass of the fluoroethylene.

5. The use of the composition of any of claims 1-4 as a heat transfer medium, a foaming agent, or a propellant.

## Patentansprüche

1. Zusammensetzung, umfassend Fluorethylen und, auf der Grundlage der Masse des Fluorethylens, 1-50.000 Masse-ppm eines Epoxids des Fluorethylens.

2. Zusammensetzung nach Anspruch 1, wobei das Fluorethylen ≥ 2 Fluoratome aufweist.

3. Zusammensetzung nach Anspruch 1 oder 2, die 1-5.000 Mol-ppm Sauerstoff auf der Grundlage der Masse des Fluorethylens enthält.

4. Zusammensetzung nach einem der Ansprüche 1-3, die 0,1-100 Masse-ppm Wasser auf der Grundlage der Masse des Fluorethylens enthält.

5. Verwendung der Zusammensetzung nach einem der Ansprüche 1-4 als ein Wärmetransfermedium, ein Schäumungsmittel oder ein Treibmittel.

## Revendications

1. Composition comprenant du fluoroéthylène et, sur la base de la masse du fluoroéthylène, 1-50 000 ppm en masse d'un époxyde du fluoroéthylène.

2. Composition selon la revendication 1, dans laquelle le fluoroéthylène présente ≥ 2 atomes de fluor.

3. Composition selon la revendication 1 ou la revendication 2, qui contient 1-5 000 ppm molaires d'oxygène, sur la base de la masse du fluoroéthylène.

4. Composition selon l'une quelconque des revendications 1 à 3, qui contient 0,1-100 ppm en masse d'eau, sur la base de la masse du fluoroéthylène.

5. Utilisation de la composition selon l'une quelconque des revendications 1 à 4 comme milieu de transfert de chaleur, agent moussant ou agent propulseur.
